# DEMANDE DE BREVET EUROPEEN

(11) **EP 2 014 911 A2**
(43) Date de publication de la demande: **14.01.2009**
(21) Numéro de dépôt: 08356050.8
(22) Date de dépôt: 19.03.2008
(51) Int. Cl.: F03B 11/00

(54) **Machine hydraulique et procédé de prévention de l'usure d'une telle machine**

(30) Priorité: 20.03.2007 FR 0702001
(71) Demandeur: Alstom Hydro France, 92309 Levallois Perret Cedex (FR)
(72) Inventeur: Traversaz, Monique, 38610 Gieres (FR); Pavillet, Robert, 38100 Grenoble (FR); Mazzouji, Farid, 38210 Vourey (FR); Couston, Michel, 38180 Seyssins (FR)
(74) Mandataire: Myon, Gérard Jean-Pierre

(57) **Abrégé**

Cette machine hydraulique est traversée par un écoulement principal d'eau (E₁) et comprend au moins un organe (2 ; 7) dont une surface (71 ; 211) est mouillée et des moyens (74 ; 216) d'injection au niveau de la surface mouillée (71 ; 211) d'un écoulement secondaire d'eau. Cette machine comprend également des moyens (9) de diminution de la teneur en particules abrasives d'une portion (E'₀) d'un flux (E₀) constituant la source de l'écoulement principal (E₁) et des moyens (8, 74 ; 216) d'amenée, à partir des moyens de diminution (9) et vers la surface mouillée (71 ; 211) de l'écoulement secondaire qui a une teneur en particules abrasives plus faible que celle de l'écoulement principal (E₁). Ceci permet de protéger la surface mouillée (71 ; 211) des particules abrasives contenues dans l'écoulement principal (E₁).

## Description

L'invention a trait à une machine hydraulique ainsi qu'à un procédé de prévention de l'usure d'une telle machine.

Au sens de la présente invention, une machine hydraulique peut être une turbine, une pompe ou une turbine-pompe utilisée, par exemple, dans une usine de production d'hydro-électricité. Dans le cas d'une turbine, la machine est installée au fil de l'eau ou et alimentée en eau à partir d'un réservoir dans lequel se déverse un ou plusieurs cours d'eau. En fonction de la nature des terrains qu'ils traversent et des conditions météorologiques, les cours d'eau charrient une quantité variable de particules abrasives, par exemple du sable ou des sédiments. Lorsque ces particules abrasives traversent la turbine, elles usent les surfaces mouillées par l'écoulement d'eau, ce qui entraîne des opérations de maintenance onéreuses, voire un risque d'arrêt de la machine en cas d'usure non détectée de façon anticipée.

Par ailleurs, il est connu de US-A-1 942 995 de prévoir un trajet d'alimentation du volume intérieur du moyeu d'une roue Francis avec de l'eau qui est alors acheminée jusque sur la surface des aubes de la roue à travers des tubes rapportés sur ces aubes. Ceci vise à améliorer l'adhérence de l'écoulement aux côtés inférieurs des aubes. Lorsque l'eau alimentant la turbine est chargée en particules abrasives, celles-ci peuvent s'accumuler dans le trajet d'alimentation du moyeu, voire obstruer les tuyaux, ce qui diminue sensiblement l'efficacité de la turbine. Cette turbine n'est donc pas adaptée à un fonctionnement dans une région où l'écoulement principal traversant la roue de turbine est susceptible d'être chargé en particules abrasives.

Tel est également le cas pour les matériels connus de DE-C-920 234 et GB-A-750 862 qui ne comportent aucune disposition permettant d'adapter le fonctionnement des turbines à un écoulement fortement chargé en particules abrasives.

Des problèmes analogues se rencontrent avec les pompes et les turbine-pompes.

C'est à ces problèmes qu'entend plus particulièrement remédier l'invention en proposant une nouvelle structure de machine hydraulique dans laquelle l'usure d'une surface mouillée par l'écoulement principal d'eau traversant la machine peut être diminuée ou éliminée, ce qui augmente la durée de vie de la machine.

A cet effet, l'invention concerne une machine hydraulique traversée par un écoulement principal d'eau et qui comprend au moins un organe dont une surface est mouillée par cet écoulement principal et des moyens d'injection, au niveau de la surface mouillée, d'un écoulement secondaire d'eau. Cette machine est caractérisée en ce que les moyens d'injection précités comprennent des moyens de diminution de la teneur en particules abrasives d'une portion d'un flux d'eau qui constitue la source de l'écoulement principal, ainsi que des moyens d'amenée, à partir des moyens précités de diminution et vers la surface mouillée, de l'écoulement secondaire qui a une teneur en particules abrasives plus faible que celle de l'écoulement principal.

Grâce à l'invention, les moyens de diminution de la teneur en particules abrasives d'une portion du flux d'entrée de la machine permettent de disposer d'une quantité d'eau "claire" ou relativement propre qui peut être utilisée au sein de la machine pour injecter au niveau de la surface mouillée, c'est-à-dire sur cette surface ou dans son voisinage immédiat, une quantité d'eau dont la teneur en particules abrasives est plus faible que celle de l'écoulement principal. Ceci permet de créer, entre cet écoulement et la surface mouillée, des filets ou une couche d'eau moins chargée en particules abrasives que l'écoulement principal, ces filets et cette couche d'eau ayant moins tendance à user la surface mouillée que l'écoulement principal. En d'autres termes, les moyens de diminution de la teneur en particules abrasives et les moyens d'amenée d'eau relativement peu chargée en particules abrasives permettent aux moyen d'injection d'isoler tout ou partie de la surface mouillée de l'écoulement principal, qui peut être fortement chargé en particules abrasives, par exemple après de fortes intempéries dans les zones géographiques traversées par les cours d'eau alimentant la machine. Tel est en particulier le cas en période de mousson ou de fonte glaciaire.

Selon des aspects avantageux mais non obligatoires de l'invention, une telle machine peut incorporer une ou plusieurs des caractéristiques suivantes :
- Les moyens d'injection comprennent des moyens de réglage du débit et/ou de la pression de l'écoulement secondaire.
- Les moyens d'injection comprennent au moins un passage de circulation de filets constitutifs de l'écoulement secondaire dont le débouché est situé sur ou au voisinage de la surface mouillée.
- L'organe qui forme la surface mouillée est au moins en partie creux et une cloison de cet organe est pourvue d'au moins un orifice de passage d'eau entre le volume interne de l'organe et la surface mouillée. Dans ce cas, l'organe comprend avantageusement une rangée d'orifices s'étendant selon une direction globalement perpendiculaire à la direction d'avance, dans la zone où débouchent les orifices, de l'écoulement d'eau principal.
- L'organe qui forme la surface mouillée est plein et pourvu de canaux d'amenée de l'écoulement secondaire au niveau de cette surface.
- Selon un premier mode de réalisation de l'invention, l'organe qui forme la surface mouillée est une directrice ou une avant-directrice de guidage de l'écoulement d'eau vers une turbine Francis.
- Selon un autre mode de réalisation de l'invention, l'organe est une roue de turbine, de pompe ou de turbine-pompe. Dans ce cas, la turbine peut être une turbine Francis dont les aubes sont creuses, alors que les moyens d'injection comprennent des orifices ménagés dans une paroi latérale d'au moins une de ses aubes ainsi qu'un conduit d'alimentation qui s'étend à la fois dans une partie fixe de la turbine et dans le plafond ou la ceinture de la roue.
- Selon un troisième mode de réalisation de l'invention, l'organe, dont une surface est mouillée, définit un espace annulaire d'entrée d'une portion de l'écoulement d'eau principal dans un labyrinthe destiné à former un palier à eau, alors que les moyens d'injection sont intégrés à une partie fixe de la machine et apte à diriger l'écoulement secondaire vers une partie tournante de la machine qui porte la surface mouillée.
- Selon un quatrième mode de réalisation de l'invention, l'organe qui porte la surface mouillée est un injecteur d'eau vers une roue de turbine, alors que les moyens d'injection sont aptes à injecter la quantité d'eau de l'écoulement secondaire sur une surface périphérique d'un pointeau de l'injecteur et/ou sur une surface formant siège pour ce pointeau.
   L'invention concerne également un procédé de prévention de l'usure d'une machine hydraulique telle que précédemment décrite et, plus spécifiquement, un procédé qui comprend des étapes consistant à
- diminuer la teneur en particules abrasives d'une portion d'un flux d'eau constituant la source de l'écoulement principal et
- injecter, au niveau de la surface mouillée de la machine, un écoulement secondaire d'eau issu de la portion du flux d'eau dont la teneur en particules abrasives a été diminuée.

De façon avantageuse, la pression et/ou le débit d'alimentation en eau injectée pour former l'écoulement secondaire sont tels que cet écoulement forme une couche d'eau à teneur en particules abrasives plus faible que celle de l'écoulement principal, entre la surface mouillée et cet écoulement principal. On peut en outre prévoir que le procédé est mis en oeuvre uniquement lorsque la teneur en particules abrasives de l'écoulement principal dépasse une valeur prédéterminée, ce qui est, par exemple, le cas en période de mousson.

L'invention sera mieux comprise et d'autres avantages de celle-ci apparaîtront plus clairement à la lumière de la description qui va suivre de quatre modes de réalisation d'une machine hydraulique conformes à son principe et d'un procédé de prévention de l'usure d'une telle machine, donnée uniquement à titre d'exemple et faite en référence aux dessins annexés dans lesquels :
- la figure 1 est une coupe de principe, d'une installation de production d'énergie comprenant une turbine Francis conforme à l'invention ;
- la figure 2 est une section partielle à plus grande échelle selon la ligne II-II à la figure 1 ;
- la figure 3 est une vue en perspective d'une directrice représentée en coupe à la figure 2 ;
- la figure 4 est une vue analogue à la figure 3 pour une directrice conforme à un second mode de réalisation de l'invention ;
- la figure 5 est une vue analogue à la figure 3 pour une directrice conforme à un troisième de réalisation de l'invention ;
- la figure 6 est section longitudinale d'une aube selon la ligne VI-VI à la figure 1 ;
- la figure 7 est une vue à plus grande échelle d'une fente d'entrée de labyrinthe de la turbine de la figure 1 ; et
- la figure 8 est une représentation schématique de principe d'un injecteur utilisé pour contrôler l'injection d'eau vers les augets d'une turbine Pelton conforme à l'invention.

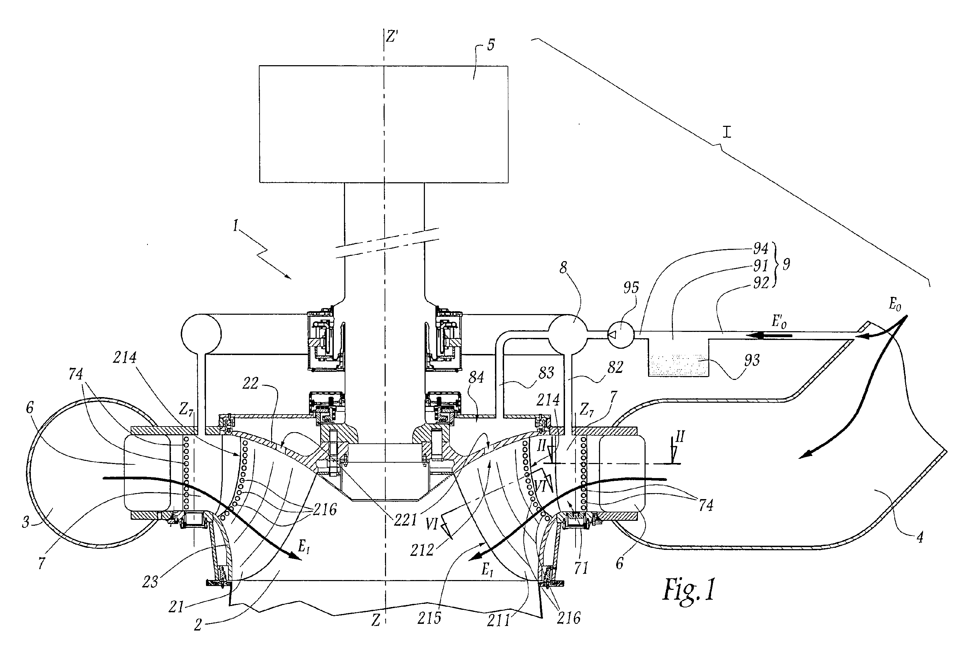

L'installation I représentée à la figure 1 comprend une turbine Francis 1 dont la roue 2 est alimentée à partir d'une bâche 3 dans laquelle débouche une conduite forcée 4. La turbine 1 est accouplée à un alternateur 5 de production d'électricité. La roue 2 comprend des aubes 21 disposées entre un plafond 22 et une ceinture 23. Entre la bâche 3 et la roue 2 sont disposées une série d'avant-directrices 6 et une série de directrices 7 dont la fonction est de guider un écoulement principal E₁ qui traverse la roue 2 en léchant les aubes 21, ce qui entraîne la rotation de la roue 2 autour d'un axe vertical Z-Z. Les avant-directrices 6 sont fixes, alors que les directrices 7 peuvent pivoter chacune autour d'un axe Z₇ parallèle à l'axe Z-Z', ceci afin de régler le débit de l'écoulement E₁.

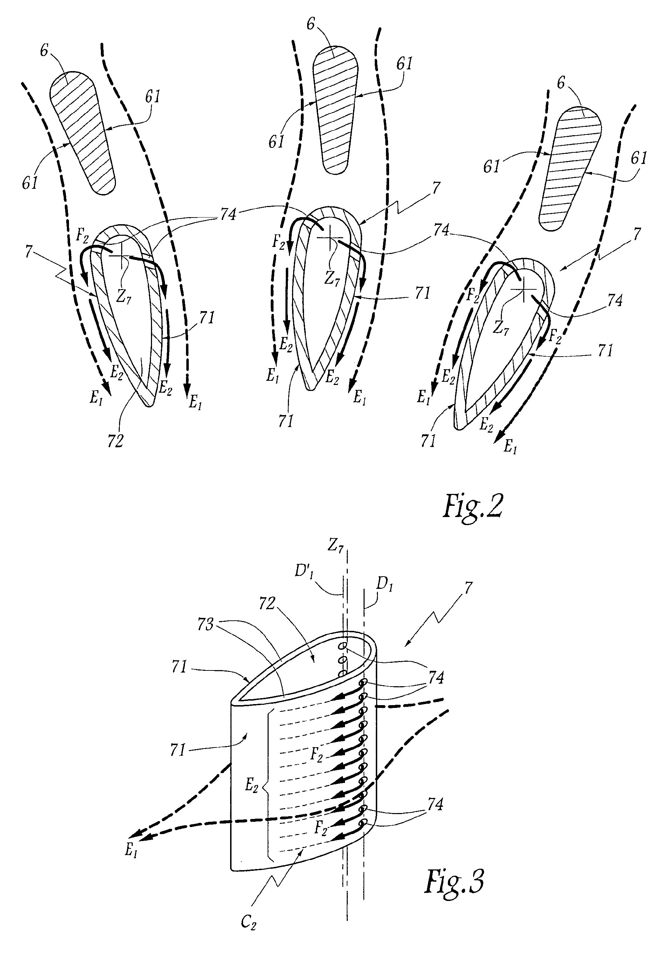

Comme il ressort de la figure 2, l'écoulement E₁ lèche les surfaces latérales 61 des avant-directrices 6 et les surfaces latérales 71 des directrices 7. En ce sens, ces surfaces 61 et 71 sont normalement mouillées par l'écoulement E₁.

Or, cet écoulement peut être fortement chargé en particules abrasives, notamment en période de fortes pluies ou de fonte glaciaire sur la zone géographique traversée par le ou les cours d'eau alimentant la conduite 4. Dans ce cas, l'écoulement E₁ peut user prématurément les surfaces 61 et 71. Pour limiter ce phénomène d'usure pour les surfaces 71, les directrices 7 sont creuses et leurs volumes intérieurs respectifs 72 sont alimentés en eau ayant une teneur en particules abrasives relativement faible, à partir d'une conduite 8 circulaire autour de l'axe Z-Z' elle-même alimentée par un système 9 dit "de dessablage d'eau" représenté de façon très schématique à la figure 1.

Le système de dessablage sert à éliminer une partie des particules abrasives présentes dans l'eau de l'écoulement s'écoulant dans la conduite 4 et comprend un bac de décantation 91 dans lequel est amenée à vitesse appropriée de l'eau acheminée par un piquage 92 dont l'embouchure est située dans la conduite 4 ou, selon des variantes non représentées de l'invention, dans un réservoir d'alimentation de cette conduite ou dans un déversoir situé en aval de la turbine 1. L'eau fournie à la conduite 8 est donc une portion E'₀ d'un flux d'eau E₀ constituant la source de l'écoulement E₁. L'eau circulant dans le piquage 92 peut décanter dans le bac 91, de sorte que les particules abrasives 93 tombent sur le fond du bac 91 et que l'eau acheminée vers la conduite 8 par un tuyau aval 94 a une teneur en particules abrasives plus faible que celle de l'écoulement E₁.

Bien entendu, d'autres systèmes de dessablage, tels qu'un hydrocyclone, peuvent être utilisés dans le cadre de l'invention.

La conduite 8 est reliée au volume intérieur 72 de chaque directrice 7 au moyen d'un tuyau 82 s'étendant dans la partie fixe de la turbine 1. Il est prévu autant de tuyaux 82 que de directrices 7. Ainsi, le volume intérieur 72 de chaque directrice 7 est alimenté à partir de la conduite 8 en eau que l'on qualifiera de "claire", c'est-à-dire qui présente une teneur en particules abrasives plus faible que l'écoulement E₁.

On note 73 les voiles ou plaques de métal constituant les côtés des directrices 7 et dont les faces externes forment les surfaces 71. Chaque plaque 73 est percée d'une série d'orifices circulaires 74 mettant en communication le volume 72 et la surface 71. Ainsi, en fonctionnement de l'installation I, l'eau provenant de la conduite 8 peut s'écouler à travers les orifices 74 en formant des filets F₂, ce qui constitue, le long des surfaces 71, un écoulement secondaire E₂ de débit inférieur à celui de l'écoulement E₁.

Ainsi, grâce à l'invention, les surfaces 71 sont mouillées à la fois par les écoulements E₁ et E₂.

Par un choix judicieux de la position et de la section des orifices 74, de la pression et/ou du débit d'alimentation en eau claire du volume 72, les différents filets F₂ s'écoulant sur une surface 71 peuvent se rejoindre, de telle sorte que l'écoulement E₂ forme une couche C₂ continue ou quasi continue d'eau claire qui isole tout ou partie de la surface 71 de l'écoulement E₁. Ceci évite que les particules abrasives présentes dans l'écoulement E₁ ne viennent heurter ou lécher les surfaces 71.

Les orifices 74 sont disposés, sur chaque plaque 73 selon une rangée qui s'étend selon une droite D₁ ou D₁' parallèle à l'axe Z₇ et perpendiculaire à la direction de l'écoulement E₁ au voisinage de la surface 71 correspondante. Ainsi, les filets d'eau claire sortant des orifices 74 se répartissent sur les surfaces 71 dans la hauteur de l'écoulement E₁.

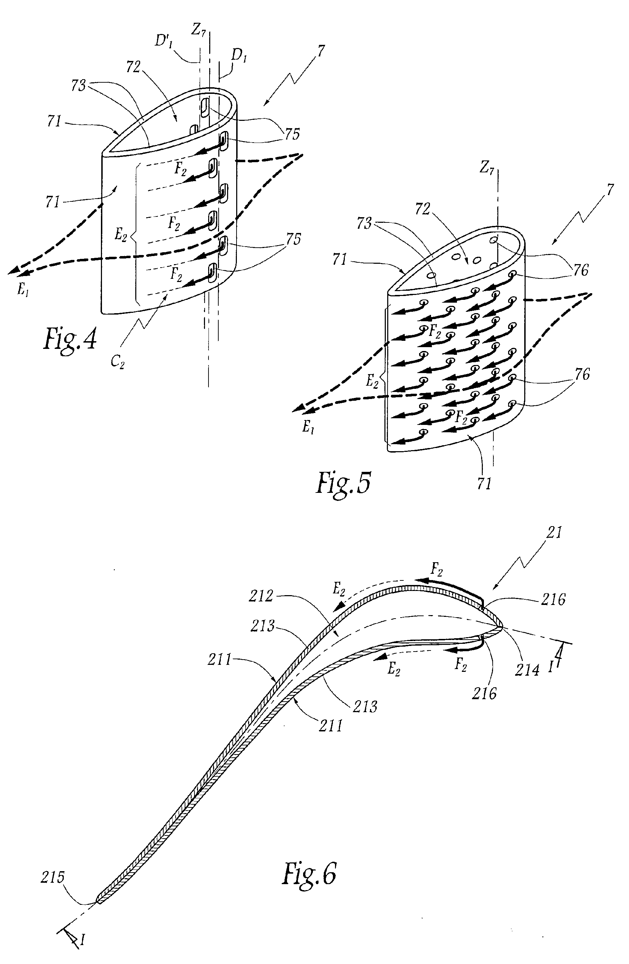

Comme représenté à la figure 4, on peut utiliser, à la place d'une série d'orifices circulaires 74, une série de fentes allongées 75 ménagées dans les voiles 73 en étant décalées les unes par rapport aux autres le long d'un axe longitudinal X₇ d'une directrice 7 afin d'éviter d'affaiblir mécaniquement les voiles 73 au niveau de ces fentes.

Les fentes 75 sont allongées selon des directions parallèles à deux droites D₁ et D₁' qui sont parallèles à l'axe Z₇ et perpendiculaires à l'écoulement E₁ au voisinage des surfaces 71, ce qui permet une répartition des filets F₂ d'eau claire dans la hauteur de l'écoulement E₁. Selon une variante non représentée de l'invention, les fentes 75 peuvent être allongées selon des directions parallèles à l'axe X₇, auquel cas elles sont globalement parallèles à l'écoulement E₁.

Les orifices 74 et les fentes 74 sont ménagés dans les parties amont des surfaces 71, ce qui permet aux filets F₂ de se regrouper en aval des orifices 74 ou fentes 75 sur les surfaces 71 pour former l'écoulement secondaire E₂.

Comme représenté à la figure 5, des orifices circulaires 76 peuvent être répartis dans les voiles 73, sur la plus grande partie des surfaces 71, ce qui permet de créer des filets d'eau claire F₂ sur l'essentiel de ces surfaces.

Comme dans le mode de réalisation de la figure 3, les filets d'eau claire F₂ appartenant à l'écoulement secondaire E₂ des modes de réalisation des figures 4 et 5 ont tendance à isoler les surfaces 71 par rapport à l'écoulement E₁ qui circule autour de la directrice 7. Comme dans le mode de réalisation de la figure 3, les filets F₂ peuvent se rejoindre pour former une couche C₂ d'eau claire qui isole tout ou partie des surfaces 71 par rapport à l'écoulement E₁.

Selon une variante de l'invention qui n'est pas représentée, les avant-directrices 6 peuvent également être creuses et pourvues d'orifices ou de fentes permettant d'acheminer des filets d'eau claire sur leurs surfaces externes 61.

Comme plus particulièrement visible à la figure 6 où la ligne I-I représente le plan de coupe de la figure 1 au niveau d'une aube, l'invention peut également être mise en oeuvre au niveau des aubes 21 de la roue 2. On note 211 les surfaces latérales des aubes 21 et 212 leur volume intérieur creux défini entre deux voiles 213 formés par des plaques de métal assemblées par soudage au voisinage du bord d'attaque 214 et du bord de fuite 215 de chaque aube 21. Chaque voile 213 est pourvu d'une série d'orifices 216 disposés au voisinage du bord d'attaque 214, de telle sorte que des filets F₂ d'eau claire peuvent s'écouler depuis le volume 212 vers et le long des surfaces 211 lorsque le volume 212 est alimenté en eau claire.

Pour ce faire, un tuyau 83 relie la conduite 8 à un espace annulaire 84 situé au-dessus du plafond 22. Ce plafond est percé d'ouvertures 221 permettant d'alimenter le volume intérieur 212 de chaque aube 21. Ainsi, l'alimentation en eau claire du volume intérieur 212 des aubes 21 a lieu par un conduit qui s'étend à la fois dans la partie fixe de la turbine, en tant que tuyau 83, entre la roue 2 et la partie fixe, en tant que volume 84, et dans la roue 2, en tant qu'ouvertures 221. En variante, au lieu de passer par le plafond 22, le conduit d'alimentation du volume 212 en eau claire peut passer par la ceinture 23.

Les orifices 216 sont disposés dans la partie amont des surfaces 211 selon une rangée courbe qui suit la géométrie du profil de chaque aube 21 et qui est perpendiculaire à l'écoulement E₁ dans la roue 2.

Ainsi, il est possible de créer, par la somme des filets F₂ sortant des orifices 216, un écoulement secondaire E₂ relativement peu chargé en particules abrasives et qui permet d'isoler les surfaces 211 de l'écoulement principal E₁.

Selon des variantes non représentées de l'invention, les trous 216 peuvent ne pas être disposés qu'au voisinage du bord d'attaque 214. Ils peuvent, par exemple être regroupés à proximité du bord de fuite 215, dans une zone proche de la ceinture 23, voire répartis sur sensiblement toute une surface 211 ou les deux, de façon analogue à ce qui est envisagé pour une directrice à la figure 5.

Par ailleurs, les directrices 7 et les aubes peuvent n'être que partiellement creuses. Ces organes de la turbine 1 peuvent même être pleins, auquel cas ils sont pourvus de canaux internes d'amenée de l'écoulement E₂ sur les surfaces 71 et 211.

On note E₀ l'écoulement d'eau dans la conduite 4. L'écoulement E₀ est la source des écoulements E₁ et E₂ et constitue l'écoulement total d'eau dans la turbine 1.

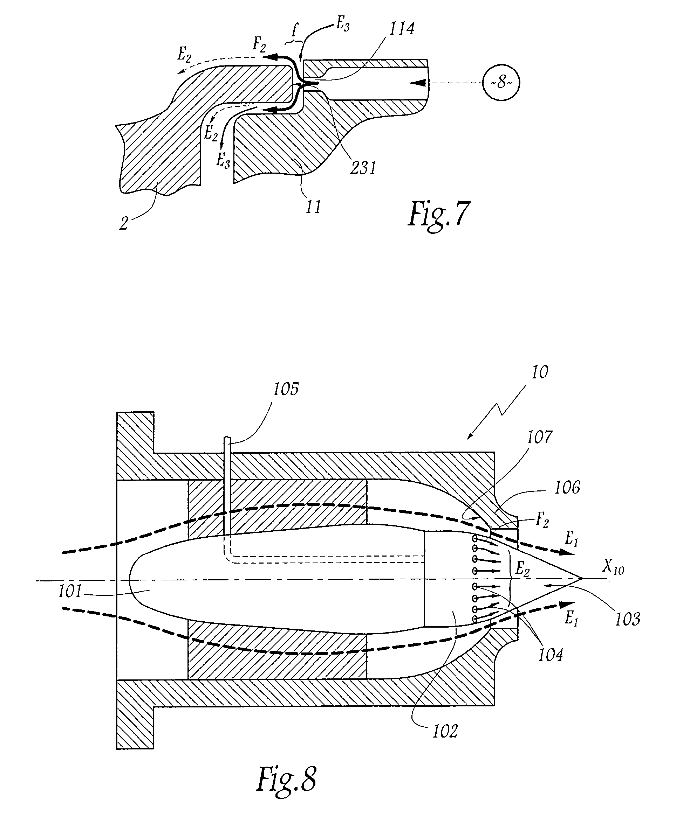

Comme il ressort de la figure 7, l'invention peut également être utilisée au niveau d'une fente f délimitée entre une partie fixe 11 de la turbine et la roue 2, cette fente étant destinée à être traversée par une partie E₃ de l'écoulement E₀ dirigée vers un labyrinthe non représenté, lequel forme, de façon connue en soi, un palier à eau. On note 231 la surface de la ceinture 23 définissant un bord de la fente f. En regard de la surface 231 et dans la partie 11 sont définis plusieurs orifices 114 alimentés en eau claire à partir de la conduite 8, ceci au moyen de tuyaux non représentés. Les orifices 114 permettent d'injecter des filets F₂ d'eau claire vers la surface 231, ce qui crée un écoulement secondaire E₂ et évite que celle-ci ne soit léchée par l'écoulement E₃ qui peut contenir des particules abrasives en proportions importantes.

En variante, dans le cas où la largeur de la fente f est choisie très faible vis-à-vis du diamètre de la roue, elle peut, à elle seule constituer le labyrinthe. Dans ce cas, en fonction de son débit, l'écoulement E₂ peut empêcher l'écoulement E₃ d'avoir lieu. En d'autres termes, seul l'écoulement E₂ se propage dans la fente f et l'écoulement E₀ est alors égal à la somme des écoulements E₁ et E₂.

Comme il ressort de la figure 8, l'invention peut également être mise en oeuvre au niveau d'un injecteur 10 d'eau en direction des augets d'une turbine Pelton non représentée, cet injecteur comprenant un corps fixe 101 ainsi qu'un pointeau 102 mobile en translation selon un axe X₁₀ par rapport au corps 101. Le pointeau 102 est creux et équipé d'une rangée d'orifices 104 alimentée en eau claire par un tuyau 105 raccordée à une conduite analogue à conduite 8 du premier mode de réalisation. Ceci permet de générer sur la surface périphérique externe 103 du pointeau 102 un écoulement secondaire E₂ formé de filets F₂, cet écoulement secondaire ayant tendance à isoler la surface 103 de l'écoulement principal E₁ traversant l'injecteur 10, lequel peut être fortement chargé en particules abrasives. Les orifices 104 sont disposés selon une rangée annulaire, autour de l'axe d'avance du pointeau 102, qui est perpendiculaire à l'écoulement principal E₁ dans l'injecteur 10.

Selon une variante de l'invention qui n'est pas représentée, en plus ou à la place du pointeau 102, le siège 106 de l'injecteur 10 peut également être équipé d'un moyen d'injection d'eau claire au niveau de sa surface intérieure 107 orientée vers le pointeau 102.

Selon une autre variante, le pointeau 102 peut être plein. Dans ce cas, le tuyau 105 se divise en plusieurs conduits d'alimentation des orifices 104. Il est également possible de prévoir, à l'intérieur du pointeau 102, une chambre annulaire de répartition de l'eau claire provenant du tuyau 105 entre les orifices 104.

Le débit et/ou la pression d'alimentation des orifices ou fentes de répartition de l'eau claire sur les surfaces mouillées 71 et équivalentes, et par voie de conséquence le débit et/ou la pression de l'écoulement E₂, peuvent être adaptés à la pression ou au débit de l'écoulement E₁. Pour ce faire, on peut utiliser une pompe de gavage 95 installée sur un conduit 94 de liaison entre le système 9 et la conduite 8. Des pompes de gavages peuvent, en variante, être installées sur les tuyaux 82 et 83. En variante, on peut également utiliser des restrictions pour contrôler le débit et/ou la pression des filets F₂.

La mise en oeuvre de l'invention peut être limitée dans le temps, notamment réservée aux périodes où l'eau constituant l'écoulement principal traversant la machine est fortement chargée en particules abrasives, telles que les périodes de mousson ou de fonte glaciaire. Pour ce faire, des moyens de mesure de la teneur de l'écoulement E₁ en particules abrasives peuvent être prévus dans l'installation I.

L'invention n'est pas limitée aux modes de réalisation décrits et peut être mise en oeuvre dans d'autres parties de machines hydrauliques susceptibles d'être soumises à des écoulements principaux ayant une teneur en particules abrasives relativement élevée, par exemple au niveau du jeu fonctionnel prévu entre les directrices 7 et les flasques supérieur et inférieur du conduit dans lequel elles sont installées. L'invention peut être mise en oeuvre au niveau des augets d'une turbine Pelton ou pour protéger toute surface mouillée, y compris les surfaces siège de films d'eau, telles que la surface supérieure du plafond d'une roue de turbine Francis.

## Revendications

1. Machine hydraulique traversée par un écoulement principal d'eau (E₁) et comprenant au moins un organe (2 ; 7 ; 10) dont une surface (71 ; 103 ; 211 ; 231) est mouillée par l'écoulement principal (E₁), et des moyens d'injection (8, 9 ; 74 ; 75 ; 76 ; 104 ; 114 ; 216), au niveau de la surface mouillée, d'un écoulement secondaire d'eau (E₂), **caractérisée en ce que** les moyens d'injection comprennent des moyens (9) de diminution de la teneur en particules abrasives d'une portion (E'₀) d'un flux (E₀) d'eau constituant la source de l'écoulement principal (E₁) et des moyens (8, 74 ; 75 ; 76 ; 104 ; 114 ; 216) d'amenée, à partir des moyens de diminution (9) et vers la surface mouillée (71 ; 103 ; 211 ; 231), de l'écoulement secondaire (E₂) qui a une teneur en particules abrasives plus faible que celle de l'écoulement principal (E₁),

2. Machine selon la revendication 1, **caractérisée en ce que** les moyens d'injection (8, 9, 74 ; 75 ; 76 ; 104 ; 114 ; 216) comprennent des moyens (95) de réglage du débit et/ou de la pression l'écoulement secondaire (E₂).

3. Machine selon l'une des revendications précédentes, **caractérisée en ce que** les moyens d'injection comprennent au moins un passage (74 ; 76 ; 104 ; 114 ; 216) de circulation de filets (F₂) constitutifs de l'écoulement secondaire (E₂), le débouché de ce passage étant situé sur ou au voisinage de la surface mouillée (71 ; 103 ; 211).

4. Machine selon la revendication 3, **caractérisée en ce que** l'organe (7 ; 2 ; 10) est au moins en partie creux et **en ce qu'**une cloison de cet organe est pourvue d'au moins un orifice (74 ; 75 ; 76 ; 104 ; 114 ; 216) de passage d'eau entre le volume interne (72 ; 212) de l'organe et la surface mouillée (71 ; 103 ; 211).

5. Machine selon la revendication 4, **caractérisée en ce que** l'organe comprend une rangée d'orifices (74 ; 75 ; 104 ; 216) s'étendant selon une direction (D₁, D'₁) globalement perpendiculaire à la direction d'avance, dans la zone (71 ; 103 ; 211) où débouchent les orifices, de l'écoulement principal (E₁).

6. Machine selon la revendication 3, **caractérisée en ce que** l'organe (7 ; 2 ; 10) est plein et pourvu des canaux d'amenée de l'écoulement secondaire au niveau de la surface mouillée (71 ; 103 ; 211 ; 231).

7. Machine selon l'une des revendications précédentes, **caractérisée en ce que** l'organe est une directrice (7) ou une avant-directrice (6) de guidage de l'écoulement principal d'eau (E₁) vers une turbine Francis (1).

8. Machine selon l'une des revendications 1 à 6, **caractérisée en ce que** l'organe est une roue (2) de turbine (1), de pompe ou de turbine-pompe.

9. Machine selon la revendication 8, **caractérisée en ce que** la turbine est une turbine Francis (1) dont les aubes (21) sont creuses, **en ce que** les moyens d'injection comprennent des orifices (216) ménagés dans une paroi latérale (213) d'au moins une aube et un conduit d'alimentation (83 , 84, 221) s'étendant à la fois dans une partie fixe de la turbine et dans le plafond (22) ou la ceinture (23) de la roue.

10. Machine selon l'une des revendications 1 à 6, **caractérisée en ce que** l'organe définit un espace annulaire (f) d'entrée d'une portion (E'₁) de l'écoulement d'eau principal (E₁) dans un labyrinthe destiné à former une palier à eau et **en ce que** les moyens d'injection (114) sont intégrés à une partie fixe (11) de la machine et aptes à diriger l'écoulement secondaire (E₂) vers une partie tournante (2) de la machine qui porte la surface mouillée (231).

11. Machine selon l'une des revendications 1 à 6, **caractérisée en ce que** l'organe est un injecteur (10) d'eau vers une roue de turbine et **en ce que** les moyens d'injection sont aptes à injecter l'écoulement secondaire (E₂) sur une surface périphérique (103) d'un pointeau (102) de l'injecteur et/ou sur une surface (107) formant siège (106) pour le pointeau.

12. Procédé de prévention de l'usure d'une machine hydraulique (1) traversée par un écoulement principal d'eau (E₁) comprenant un organe (2 ; 7 ; 10) dont une surface (71 ; 103 ; 211 ; 231) est mouillée par cet écoulement, **caractérisé en ce qu'**il comprend des étapes consistant à :
- diminuer la teneur en particules abrasives d'une portion (E'₀) d'un flux d'eau (E₀) constituant la source de l'écoulement principal (E₁) et
- injecter (F₂), au niveau de la surface mouillée (71 ; 103 ; 211 ; 231), un écoulement secondaire (E₂) d'eau issu de la portion (E'₀) du flux d'eau (E₀) dont la teneur en particules abrasives a été diminuée.

13. Procédé selon la revendication 12, **caractérisé en ce que** la pression et/ou le débit d'alimentation en eau injectée (F₂) pour former l'écoulement secondaire (E₂) sont tels que cet écoulement forme, entre la surface mouillée et l'écoulement principal (E₁), une couche d'eau (C₂) à teneur en particules abrasives plus faible que celle de l'écoulement principal.

14. Procédé selon l'une des revendications 14 ou 15, **caractérisé en ce qu'**il est mis en oeuvre uniquement lorsque la teneur en particules abrasives de l'écoulement principal (E₁) dépasse une valeur prédéterminée.
